**Europäisches Patentamt**

**European Patent Office**

**Office européen des brevets**

(11) Veröffentlichungsnummer: **0 305 645 B1**

# EUROPÄISCHE PATENTSCHRIFT

(45) Veröffentlichungstag der Patentschrift: **26.02.92**

(51) Int. Cl.$^5$: **B60R  11/02**

(21) Anmeldenummer: **88106993.4**

(22) Anmeldetag: **02.05.88**

(54) **Auto-Rundfunkgerät.**

(30) Priorität: **27.08.87 DE 3728590**

(43) Veröffentlichungstag der Anmeldung:
**08.03.89 Patentblatt  89/10**

(45) Bekanntmachung des Hinweises auf die
Patenterteilung:
**26.02.92 Patentblatt  92/09**

(84) Benannte Vertragsstaaten:
**AT CH DE FR GB IT LI**

(56) Entgegenhaltungen:
**EP-A- 0 116 780**
**DE-A- 3 005 532**
**DE-A- 3 624 716**
**FR-A- 2 592 846**

(73) Patentinhaber: **GRUNDIG E.M.V. Elektro-
Mechanische Versuchsanstalt Max Grundig
holländ. Stiftung & Co. KG.
Kurgartenstrasse 37
W-8510 Fürth/Bay.(DE)**

(72) Erfinder: **Zacher, Heinz c/o GRUNDIG E.M.V.
Max Grundig
holländ. Stiftung & Co KG Kurgartenstrasse
37
W-8510 Fürth/Bay(DE)**

**Beschreibung**

Die vorliegende Erfindung bezieht sich auf ein Auto-Rundfunkgerät mit integriertem Kassetten- oder CD-Laufwerk, das als Einschubteil ausgebildet und mit der Bedienungsseite sichtbar im Bereich des Armaturenbrettes eines Kraftfahrzeuges eingesetzt ist. Ein derartiges Auto-Rundfunkgerät ist aus der nicht vorveröffentlichten Patentanmeldung DE-A-36 24 716 bekannt.

Ein Autoradio ähnlicher Bauart und entsprechend dem Oberbegriff des Anspruchs 1 ist auch aus der EP-A1-0116780 bekannt. Dieses zweigeteilt. Es besitzt ein fest mit dem Auto verbundenes Geräteteil, das das Rundfunkempfangsteil und ein Kassettenlaufwerk mit Kassetten-Einschubschacht enthält, sowie ein zweites Teil, welches abnehmbar ist und die Bedienelemente, eine Anzeige und eine Beleuchtungseinrichtung enthält.

Beide Teile sind über steckbare Kontaktstellen miteinander verbunden. Nur wenn diese Verbindung besteht, ist das Autoradio komplett und funktionsfähig. Wird das abnehmbare Teil abgenommen, so ist das im Fahrzeug zurückbleibende fest eingebaute Teil nicht mehr funktionsfähig und somit für einen Dieb uninteressant und unbrauchbar.

Aufgabe der Erfindung ist es, bei einem Auto-Rundfunkgerät mit abnehmbarem Bedienteil das Abnehmen oder Verriegeln des Gerätebedienteils mit dem Geräte-Hauptteil so zu gestalten, daß das Geräte-Bedienteil keine zusätzlichen Teile im Sinne der Ausgestaltung einer Verriegelungseinrichtung aufweist, und daß das Bedienteil in einfachster Weise sowohl flächig als auch konturenbezogen zu beleuchten ist.

Diese Aufgabe wird erfindungsgemäß durch die kennzeichnenden Merkmale des Patentanspruch 1 gelöst.

Einzelheiten der Erfindung werden im folgenden anhand der Zeichnungen erläutert.

Fig.1 ist eine Draufsicht auf die Frontseite eines Auto-Rundfunkgerätes mit einem abnehmbaren Bedienteil,

Fig.2 ist eine Seitenansicht des Geräte-Bedienteils im Schnitt,

Fig.3 ist eine Draufsicht auf ein in das Geräte-Bedienteil eingesetztes Tragteil,

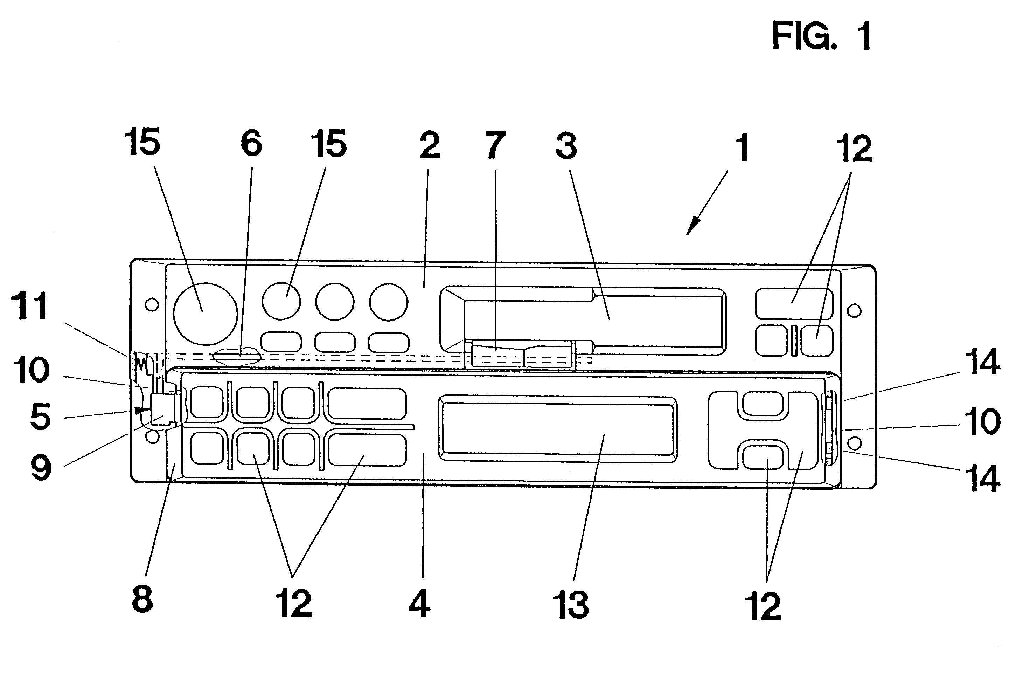

Aus der Figur 1 ist die Frontseite eines Auto-Rundfunkgerätes 1 ersichtlich, das als Einschubteil ausgebildet ist, wobei die Zeichnung nur den im Armaturenbrett sichtbaren Bedienungsbereich zeigt. Der sichtbare Bedienungsbereich unterteilt sich in einen Bedienungsbereich der einem Geräte-Hauptteil 2 mit Kassetteneinschubschacht 3 und einem trennbaren Geräte-Bedienteil 4 zugeordnet ist. Das Geräte-Hauptteil 2 weist eine Verriegelungseinrichtung 5 auf, über die das Geräte-Bedienteil 4 mit dem Hauptteil lösbar verbunden ist. Die Verriegelungseinrichtung besteht aus einem Verriegelungsschieber 6, der innerhalb der Frontseite des Geräte-Hauptteils 2 gelagert ist, und dem im äußeren Bereich des Kassetteneinschubschachtes 3 eine Schiebetaste 7 aufgesetzt ist. Die Schiebetaste dient gleichzeitig als Führungsteil für eine in das Gerät einzuschiebende Kassette. Im Bereich einer der beiden Schmalseiten 8 des Bedienteils 4 weist der Verriegelungsschieber 6 eine Sperrklinke 9 auf, die in eine schlitzförmige Ausnehmung 10 an der schmalen Stirnseite des Bedienteils eingreift. Der Verriegelungsschieber mit Sperrklinke wird ständig in die Sperrrichtung durch eine Druckfeder 11 gedrückt. Das Bedienteil 4 weist verschiedene Druck- und Wipp-Tasten 12 auf, ebenso ein Anzeigefeld in Form einer LCD-Anzeige 13. Eingesetzt wird das Bedienteil in das Hauptteil derart, daß die der Verriegelungsseite gegenüberliegende Schmalseite des Bedienteils zuerst mit einer ebenfalls an dieser Seite vorhandenen schlitzförmigen Ausnehmung hinter eine oder zwei Haltenasen im Geräte-Hauptteil 2 greift und dann durch Einschwenken und durch Druck auf die gegenüberliegende Schmalseite in die Sperrklinke einfällt und verriegelt ist. Das Geräte-Hauptteil 2 weist ähnlich wie das Bedienteil einige Grund-Bedienelemente in Form von Drucktasten 12' und insbesondere Drehknöpfe 15 auf.

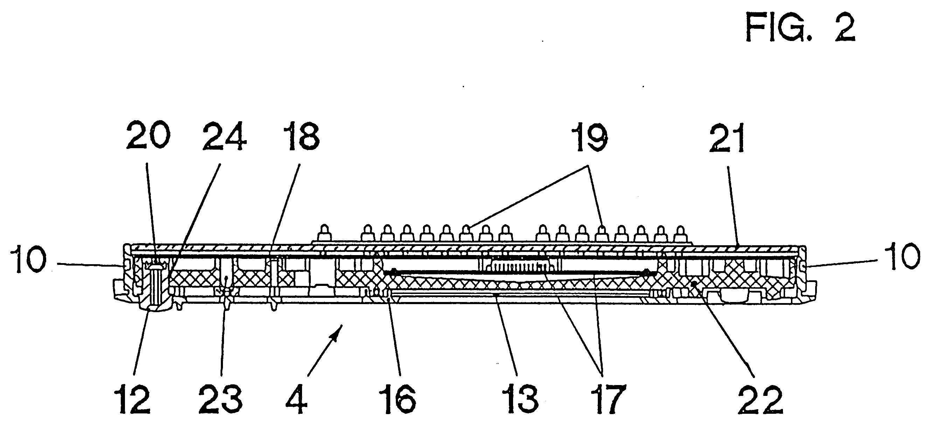

Die Figur 2 zeigt das Gerätebedienteil 4 im Schnitt, wobei das Gerätebedienteil im wesentlichen aus einem Kunststoffgehäuse 16 mit seitlich angeordneten schlitzförmigen Ausnehmungen 10, einer LCD-Anzeige 13 mit zugeordnetem Mikroprozessor-Baustein 17, und ferner aus einer darüberliegenden Leiterplatte 18 besteht. Die Leiterplatte 18 weist eine Vielzahl von Trenn-Kontaktstellen in Form von Kontaktstiften 19 und einige Druckkontaktstellen für mehrere Drucktasten 12 auf. Abgedeckt ist das Gehäuse 16 des Bedienteils durch eine im Gehäuse einrastbare Abdeckung 21. Zwischen der LCD-Anzeige 13 und der Leiterplatte 18 befindet sich ein aus transparentem Kunststoff gespritztes Tragteil 22. Das Tragteil ist als Lichtleiter, insbesondere zur Beleuchtung der LCD-Anzeige 13 sowie verschiedener Drucktasten 12, und gleichzeitig als Führungsteil für die Drucktasten 12 in Form eines Chassis ausgebildet. Ferner sind mehrere Lichtquellen 23 in das Tragteil bzw. auf die Leiterplatte 18 aufgesetzt.

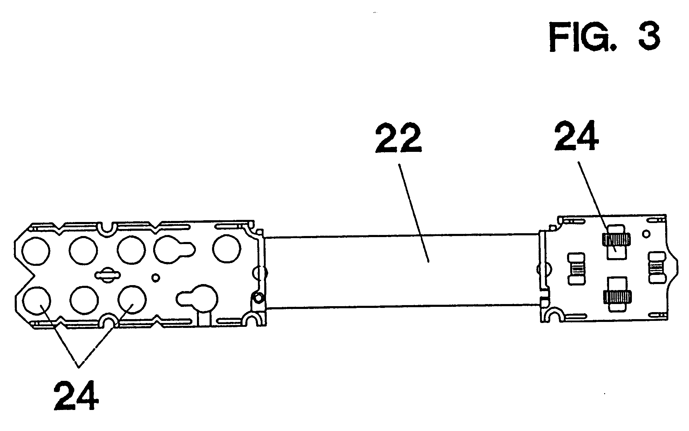

Die Figur 3 zeigt eine Draufsicht auf das Tragteil 22 mit den zugeordneten Tastenführungen 24, wobei die Tastenführungen verschiedenartig ausgebildet sein können. Das Kunststoffgehäuse des Bedienteils kann auch derart ausgebildet sein, daß in die Vorderseite eine Frontplatte als planes Stanzteil eingelegt ist. Um verschiedene Gerätebedienteile für unterschiedliche Gerätetypen herzustellen, sind lediglich die Tastendurchbrüche zu ändern und die Tastenführungen im Tragteil entsprechend anzupassen.

**Patentansprüche**

1. Auto-Rundfunkgerät mit integriertem Kassetten- oder CD-Laufwerk, das als Einschubteil ausgebildet und mit der Bedienungsseite sichtbar im Bereich des Armaturenbrettes eines Kraftfahrzeuges eingesetzt ist, wobei das Auto-Rundfunkgerät aus einem Geräte-Hauptteil (2) und einem trennbaren Geräte-Bedienteil (4) besteht, und beide Teile elektrische Trennstellen aufweisen, sowie das Bedienteil (4) mit dem Hauptteil (2) verbunden ist, und das Geräte-Hauptteil (2) einen Kassetten- oder Platteneinschubschacht (3) aufweist, weiterhin das Geräte-Bedienteil aus einem Gehäuse (16), einer eingesetzten Anzeige (13) mit zugeordnetem Mikroprozessor-Baustein (17), aus einer Leiterplatte (18) mit Druckkontaktstellen, einer Vielzahl von Trenn-Kontaktstellen und einem einstückigen Tragteil (22) besteht, wobei wenigstens eine Lichtquelle (23) in das Tragteil (22) eingesetzt ist, dadurch gekennzeichnet, daß das Bedienteil (4) mit dem Hauptteil (2) durch eine lösbare, dem Hauptteil (2) zugeordnete Verriegelungseinrichtung (5) verbunden ist, daß das Gehäuse (16) aus Kunststoff besteht, daß die Anzeige (13) eine LCD-Anzeige ist, und daß das Tragteil (22) zwischen der Anzeige (13) und der Leiterplatte (18) eingesetzt, aus transparentem Kunststoff gefertigt und als Lichtleiter ausgebildet ist.

2. Auto-Rundfunkgerät nach Anspruch 1, dadurch gekennzeichnet. daß die dem Geräte-Hauptteil (2) zugeordnete Verriegelungseinrichtung (5) aus einem dem Hauptteil zugeordnetem Verriegelungsschieber (6) mit aufgesetzter Sperrklinke (9) besteht, daß der Verriegelungsschieber über eine Schiebetaste (7), die sich im äußeren Bereich des Kassetteneinschubschachtes (3) befindet, zu betätigen ist, daß das Geräte-Bedienteil an beiden Schmalseiten schlitzförmige Ausnehmungen (1) aufweist, und mit einer der Schmalseiten eine Haltenase am Geräte-Hauptteil im Sinne einer formschlüssigen Verbindung einzuschwenken ist, und daß durch einen Druck auf die gegenüberliegende Schmalseite das Bedienteil durch Einfallen der Sperrklinke des Verriegelungsschiebers in die zweite schlitzförmige Ausnehmung mit dem Bedienteil verbunden ist,oder daß durch Betätigen der Schiebetaste (7) die Sperrklinke außer Eingriff kommt und das Geräte-Bedienteil (4) vom Hauptteil (2) abzutrennen ist.

3. Auto-Rundfunkgerät nach den Ansprüchen 1 und 2, dadurch gekennzeichnet, daß das Tragteil (22) als kombinierter Lichtleiter zum flächigen Durchleuchten der LCD-Anzeige (13) und der Tasten (12), oder von Symbolen in den Tasten oder von Einfassungen der Tasten ausgeführt ist, und daß das Tragteil gleichzeitig als Führungsteil für die Kontaktkörper der Drucktasten (12) ausgebildet ist, und ferner der Positionierung sowie der Halterung wenigstens eines Kontaktgummiestreifens zur Kontaktierung der LCD-Anzeige (13) mit dem zugeordneten Mikroprozessor-Baustein (17) dient.

4. Auto-Rundfunkgerät nach einem der bisherigen Ansprüche, dadurch gekennzeichnet, daß das Tragteil (22) Auflagen zur Aufnahme der LCD-Steuerleiterplatte für den Mikroprozessor-Baustein (17) aufweist und über die Steuerleiterplatte im Kunststoffgehäuse des Bedienteils befestigt ist.

5. Auto-Rundfunkgerät nach einem der bisherigen Ansprüche dadurch gekennzeichnet, daß das Kunststoffgehäuse (16) des Bedienteils durch eine einrastbare Abdeckung (21) abgedeckt ist.

6. Auto-Rundfunkgerät nach einem der bisherigen Ansprüche, dadurch gekennzeichnet, daß die Frontseite des Kunststoffgehäuses oder eine in das Kunststoffgehäuse eingelegte Frontplatine unterschiedliche Tastendurchbrüche aufweisen, und daß durch Anpassung der zugeordneten Tastenführungen im Tragkörper eine Vielzahl von Tastenanordnungen im Gerätebedienteil möglich sind.

**Claims**

1. Car radio having an integrated cassette or CD drive which is constructed as an insertion component and is visible on the operating side, is installed in the region of the dashboard of a motor vehicle, the car radio consisting of a main unit (2) and a separable operating unit (4), and both components having electrical disconnection points, and the operating unit (4) is connected to the main unit (2), and the main unit (2) has a cassette or record insertion shaft (3), the operating unit consisting furthermore of a housing (16), an installed display (13) with associated microprocessor component (17), of a printed circuit board (18) with pressure contact points, a multiplicity of disconnection contact points and an integral carrying component (22), at least one light source (23) being inserted into the carrying component (22), characterised in that the operating unit (4) is connected to the main unit (2) by a releasable locking device (5) associated with the main unit (2), in that the housing (16) consists of plastic, that the display (13) is an LCD display and in that the carrying component (22) is installed between the display (13) and the printed circuit board (18), produced from transparent plastic and is constructed as a waveguide.

2. Car radio according to Claim 1, characterised in that the locking device (5) associated with the main unit (2) consists of a locking slide (6) associated with the main unit and having a catch (9) mounted on it, in that the locking slide is to be actuated by means of a sliding key (7) which is located in the outer region of the cassette insertion shaft (3), in that the operating unit has slot-shaped recesses (1) on both narrow sides, and is to be swivelled with one of the narrow sides into a retaining nose on the main unit with the effect of a positively engaging connection, and in that the operating unit is connected to the operating unit by means of a pressure on the opposite narrow side as a result of the clamping of the catch of the locking slide into the second slot-shaped recess, or in that the catch disengages as a result of actuation of the sliding key (7) and the operating unit (4) is to be disconnected from the main unit (2).

3. Car radio according to Claims 1 and 2, characterised in that the carrying component (22) is designed as a combined waveguide for the plane illumination of the LCD display (13) and of the keys (12), or of symbols in the keys or of elements enclosed in the keys, and in that the carrying component is constructed at the same time as a guide component for the contact bodies of the push-button keys (12), and serves additionally for positioning or retaining at least one contact rubber strip for the purpose of making contact between the LCD display (13) and the associated microprocessor component (17).

4. Car radio according to one of the preceding claims, characterised in that the carrying component (22) has supports for receiving the LCD control printed circuit board for the microprocessor component (17) and is fastened in the plastic housing of the operating unit by means of the control printed circuit board.

5. Car radio according to one of the preceding claims, characterised in that the plastic housing (16) of the operating unit is covered by a lock-in cover (21).

6. Car radio according to one of the preceding claims, characterised in that the front of the plastic housing or a front board inserted into the plastic housing has different keyholes, and in that a multiplicity of key arrangements in the operating unit are possible by adaption of the associated key guides in the carrier body.

**Revendications**

1. Autoradio à lecteur incorporé de cassettes ou de disques compacts, réalisé sous forme d'élément encastrable et encastré avec le côté de commande visible dans la région du tableau de bord d'un véhicule automobile, l'autoradio étant constitué d'une partie principale d'appareil (2) et d'une partie de commande d'appareil séparable (4) et les deux parties présentant des points de coupure électrique, la partie de commande (4) étant assemblée à la partie principale (2) et la partie principale (2) présentant une trappe (3) d'insertion de cassettes ou de disques, et la partie de commande étant constituée d'un boîtier (16), d'une unité d'affichage incorporée (13) à laquelle est associé un module de microprocesseur (17), d'une plaquette imprimée (18) avec des points de contact de pression, d'une multiplicité de points de contact de coupure et d'un élément porteur en une pièce (22), au moins une source lumineuse (23) étant incorporée dans l'élément porteur (22), caractérisé en ce que la partie de commande (4) est assemblée à la partie principale (2) par un dispositif de verrouillage amovible (5) associé à la partie principale (2), en ce que le boîtier (16) est réalisé en matière plastique, en ce que l'unité d'affichage (13) est une unité d'affichage à cristaux liquides, et en ce que l'élément porteur (22) est incorporé entre l'unité d'affichage (13) et la plaquette imprimée (18), réalisé en matière plastique transparente et conçu comme guide de lumière.

2. Autoradio selon la revendication 1, caractérisé en ce que le dispositif de verrouillage (5) associé à la partie principale d'appareil (2) est constitué d'un poussoir de verrouillage (6), associé à la partie principale et sur lequel est monté un cliquet de blocage (9), en ce que le poussoir de verrouillage peut être actionné par l'intermédiaire d'une touche coulissante (7) qui se trouve dans la région extérieure de la trappe d'introduction de cassettes (3), en ce que la partie de commande d'appareil présente sur ses deux côtés étroits des évidements en forme de fentes (10), et peut être rentrée par pivotement par l'un de ses côtés étroits dans un ergot de retenue qui se trouve sur la partie principale d'appareil, afin d'obtenir un assemblage en engagement positif, et en ce que, par une pression sur le côté étroit opposé, la partie de commande est assemblée à la partie principale par la chute du cliquet de blocage du poussoir de verrouillage dans le second évidement en forme de fente, ou en ce qu'en actionnant la touche coulissante (7), le cliquet de blocage est désengagé et la partie de commande (4) peut être séparée de la partie principale (2).

3. Autoradio selon la revendication 1 ou 2, caractérisé en ce que l'élément porteur (22) est conçu comme guide combiné de lumière pour éclairer en surface, par transmission, l'unité d'affichage à cristaux liquides (13) et les touches (12), ou bien des symboles dans les touches ou des encadrements des touches, et en ce que l'élément porteur est simultanément conçu comme élément de guidage pour les corps de contact des touches de pression (12), et sert en outre à positionner et maintenir au moins une bande de caoutchouc de contact destinée à mettre en contact l'unité d'affichage à cristaux liquides (13) avec le module de microprocesseur associé (17).

4. Autoradio selon l'une des revendications précédentes, caractérisé en ce que l'élément porteur (22) présente des supports pour recevoir la plaquette imprimée associée au module de microprocesseur (17) pour commander l'affichage à cristaux liquides, et est fixé par l'intermédiaire de cette plaquette de commande dans le boîtier en matière plastique de la partie de commande.

5. Autoradio selon l'une des revendications précédentes, caractérisé en ce que le boîtier en matière plastique (16) de la partie de commande est recouvert par un élément de recouvrement enclenchable (21).

6. Autoradio selon l'une des revendications précédentes, caractérisé en ce que le côté avant du boîtier en matière plastique ou une platine frontale mise en place dans ce boîtier présente différents passages de touches, et en ce qu'en adaptant les guidages de touches associés de l'élément porteur, on petit prévoir une multiplicité d'agencements de touches dans la partie de commande d'appareil.

FIG. 1

FIG. 2

FIG. 3